# FASCICULE DE BREVET EUROPEEN

(11) **EP 4 363 705 B1**
(45) Date de publication et mention de la délivrance du brevet: **06.08.2025**
(21) Numéro de dépôt: 22750853.8
(22) Date de dépôt: 30.06.2022
(51) Int. Cl.: F02C 7/045

(54) **ENSEMBLE D'ISOLATION ACOUSTIQUE POUR GROUPE AUXILIAIRE DE PUISSANCE À COMPRESSEUR CENTRIFUGE**
SCHALLISOLATIONSANORDNUNG FÜR EIN HILFSTRIEBWERK MIT EINEM KREISELVERDICHTER
ACOUSTIC INSULATION ASSEMBLY FOR AN AUXILIARY POWER UNIT HAVING A CENTRIFUGAL COMPRESSOR

(30) Priorité: 01.07.2021 FR 2107133
(43) Date de publication de la demande: 08.05.2024
(73) Titulaire: Safran Power Units, 31200 Toulouse (FR)
(72) Inventeur: TARDY, Laurent Stéphane, 77550 MOISSY CRAMAYEL (FR); CULLA, Jaime Georges Paul, 77550 MOISSY CRAMAYEL (FR)
(74) Mandataire: Casalonga
(86) Numéro de dépôt international: PCT/FR2022/051308
(87) Numéro de publication internationale: WO 2023/275499

(56) Documents cités:
- WO-A1-2019/135058
- FR-A1- 3 055 612

## Description

### Domaine technique

L'invention concerne un carter d'entrée d'air d'un groupe auxiliaire de puissance, et se rapporte plus particulièrement à l'isolation acoustique de tels carters.

### Etat de la technique antérieure

Un aéronef comprend généralement un groupe motopropulseur formé par une pluralité de turbomachines destinées à fournir la poussée nécessaire à une mise en mouvement de l'aéronef.

Chaque turbomachine est logée dans une nacelle et comprend des compresseurs, des chambres de combustion, des turbines ainsi qu'une soufflante positionnée en amont d'une entrée d'air de la turbomachine.

Afin d'alimenter en énergie différents systèmes électriques, mécaniques, pneumatiques ou hydrauliques de l'aéronef et ainsi réduire la sollicitation des turbomachines, l'aéronef comprend un groupe auxiliaire de puissance (« Auxiliary Power Unit » en anglais) situé généralement à l'arrière du fuselage et plus particulièrement dans le cône de queue de l'aéronef.

Le bruit produit par le groupe auxiliaire de puissance lors de son fonctionnement est cependant gênant pour les riverains des aéroports.

A cet effet, de tels groupes auxiliaires de puissance doivent satisfaire à des normes acoustiques qui imposent un seuil de niveau sonore que les entrées d'air ne doivent pas outrepasser.

Pour réduire le bruit généré par l'entrée d'air, différentes solutions sont alors proposées par les constructeurs aéronautiques telles que l'insertion de pièces mécaniques ayant un revêtement d'isolation acoustique, dit en nid d'abeille, dans l'entrée d'air.

Un tel revêtement acoustique comprend généralement une structure alvéolaire et une couche perméable à l'air destinée à être en contact avec le flux d'air circulant à l'intérieur de l'entrée d'air.

La demande internationale, portant la référence WO202058651, décrit des panneaux acoustiques en nid d'abeille courbés et localisés à l'intérieur de la nacelle d'une turbomachine et/ou sur la nacelle de ladite turbomachine permettant ainsi d'atténuer les nuisances sonores de la soufflante.

Cette solution peut être également intégrée à l'entrée d'air du groupe auxiliaire de puissance mais comme celui-ci est constamment soumis aux vibrations générées par son propre moteur, le revêtement acoustique subit des dégradations au fur et à mesure de son utilisation.

De même, lors des phases de décollage ou d'atterrissage de l'aéronef, le groupe auxiliaire de puissance est susceptible d'ingérer des corps étrangers de taille plus ou moins importante (oiseaux, glace, etc.).

Ces incidents peuvent générer des chocs violents pouvant altérer partiellement ou totalement le revêtement acoustique et dégrader ses performances.

Le bruit généré par le groupe auxiliaire de puissance dépasse alors le seuil réglementaire et doit donc être changé rapidement pour que l'aéronef puisse être remis en service.

L'installation d'un nouveau panneau acoustique requiert alors de remplacer entièrement le carter de l'entrée d'air, ce qui peut être fastidieux et lent à mettre en œuvre. Le document FR3055612A1 décrit un autre ensemble d'isolation acoustique de l'art antérieur.

Le but de l'invention est donc de proposer une solution d'isolation acoustique du carter de l'entrée d'air qui soit facile d'accès et simple à remplacer si besoin lors d'une maintenance.

### Exposé de l'invention

Au vu ce qui précède, l'invention a pour objet un ensemble d'isolation acoustique pour groupe auxiliaire de puissance à compresseur centrifuge, comprenant un carter d'entrée d'air de forme annulaire et comportant une pluralité de bras de renfort reliant ses parois internes.

L'ensemble comprend une pluralité de pièces mécaniques amovibles d'isolation acoustique, chaque pièce mécanique étant de forme annulaire, présentant une face de fixation formée par une surface radiale destinée à être positionnée en contact avec une surface radiale intérieure du carter, et une face opposée destinée à être en regard avec l'intérieur du carter et comprenant des moyens de fixation destinés à coopérer avec le carter de sorte que la pièce mécanique et la surface d'écoulement du carter, délimitée par une paire de bras de renfort, soient superposées.

La pièce mécanique étant de forme annulaire, celle-ci vient s'insérer de manière amovible entre deux bras de renfort du carter.

La pièce mécanique est alors disposée sur la surface d'écoulement du carter, ce qui permet de réduire considérablement le bruit généré par l'entrée d'air.

Ainsi, lorsque la pièce mécanique est endommagée de sorte à dégrader ses performances d'isolation acoustique, il est possible de la remplacer par une autre pièce mécanique d'isolation acoustique sans devoir démonter intégralement le carter et le substituer par un autre.

Le nombre de pièces mécaniques est égal au nombre de bras de renfort du carter.

Par conséquent, on réduit significativement la durée des opérations de maintenance destinées à cet effet.

Avantageusement, les moyens de fixation comportent au moins deux premiers logements creusés dans une surface d'extrémité radialement extérieure de la pièce mécanique et au moins un deuxième logement creusé dans une surface d'extrémité radialement intérieure de la pièce mécanique, les deux premiers logements étant chacun aptes à recevoir une vis de serrage et le deuxième logement étant apte à recevoir un pion de centrage situé sur une surface d'extrémité radialement intérieure du carter.

Ainsi, d'une part, la pièce mécanique est maintenue en position via l'un des pions de centrage du carter apte à s'insérer dans le deuxième logement des moyens de fixation et, d'autre part, par les deux premiers logements des moyens de fixation de la pièce mécanique et deux des logements du carter creusés dans sa surface d'extrémité radialement extérieure.

Les deux logements du carter et les deux premiers logements des moyens de fixation de la pièce mécanique reçoivent alors chacun une vis de serrage.

Les moyens de fixation ainsi disposés facilitent le démontage de la pièce mécanique.

De préférence, la pièce mécanique comporte un flasque métallique de support ayant une surface active munie d'une cavité creusée, une couche d'isolation acoustique ayant une structure alvéolaire disposée dans la cavité, et une couche perméable à l'air recouvrant la couche d'isolation acoustique et destinée à être en contact avec le flux d'air circulant à l'intérieur de l'entrée d'air

Préférentiellement, la couche d'isolation acoustique et la couche perméable à l'air sont fixées entre elles par collage.

Le collage assure une bonne répartition des contraintes mécaniques et permet de résister durablement à la corrosion.

En variante, la couche d'isolation acoustique et la couche perméable à l'air sont fixées entre elles par soudage.

Il est possible de recourir au soudage lorsque la couche perméable à l'air est sous forme de tissus métalliques tressés ou sous forme de tôles perforées par exemple.

Avantageusement, la couche d'isolation acoustique est fixée à la cavité par collage.

La colle permet ainsi à la première couche d'adhérer à la cavité sans appliquer une importante pression dessus.

Avantageusement, le carter comporte une grille de protection d'entrée d'air.

Une telle grille de protection permet d'empêcher l'intrusion d'un corps étranger (FOD pour « Foreign Object Debris ») dans l'entrée d'air du carter et peut être fixée en surface du carter via les vis de serrage utilisés pour maintenir en position la pièce mécanique.

L'invention a également pour objet un groupe auxiliaire de puissance à compresseur centrifuge pour aéronef, comprenant un ensemble d'isolation acoustique tel que défini ci-dessus.

L'invention a encore pour objet un aéronef qui comprend un groupe auxiliaire de puissance tel que défini ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] représente de manière schématique une vue en coupe d'un groupe auxiliaire de puissance à compresseur centrifuge pour aéronef selon l'état de la technique ;
[Fig 2] illustre schématiquement une vue en perspective de l'entrée d'air du groupe auxiliaire de puissance selon l'art antérieur ;
[Fig 3] illustre schématiquement une pièce mécanique d'isolation acoustique selon un mode de réalisation de l'invention ;
[Fig 4] illustre une vue en perspective d'un ensemble de quatre pièces mécaniques d'isolation acoustique selon un mode de réalisation de l'invention ;
[Fig 5] illustre une vue en perspective des moyens de fixation d'une des pièces mécaniques et du carter selon un mode de réalisation de l'invention et,
[Fig 6] représente les pièces mécaniques disposées sur la surface radiale extérieure du carter de l'entrée d'air selon un mode de réalisation de l'invention.

### Exposé détaillé des modes de réalisation de l'invention

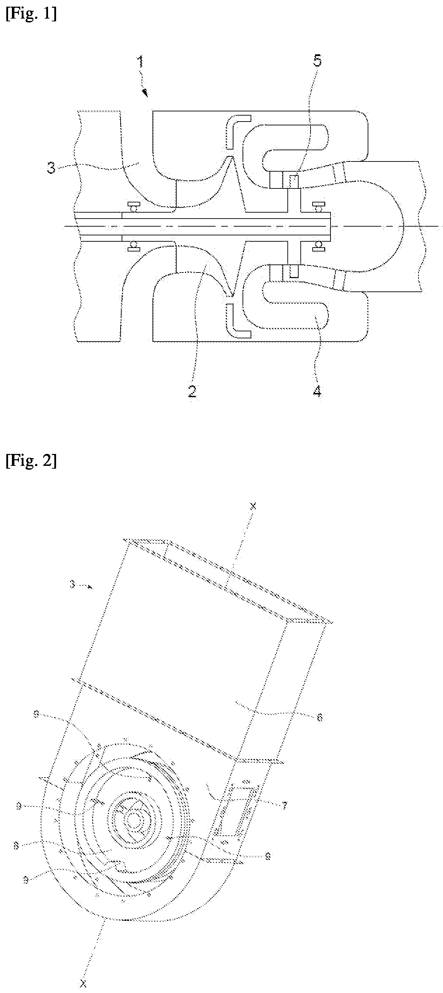

Sur la figure 1 est représenté un groupe auxiliaire de puissance 1 à compresseur centrifuge destiné à produire de l'énergie électrique, mécanique, pneumatique ou hydraulique à bord d'un aéronef.

Le groupe auxiliaire de puissance 1 est positionné à l'arrière de l'aéronef et plus particulièrement dans le cône de queue.

Il comprend un compresseur 2 apte à recevoir de l'air ambiant par une entrée d'air 3 pour le comprimer puis le délivrer à une chambre de combustion 4.

La combustion d'un carburant, ici le kérozène, dans de l'oxygène de l'air est alors mise en œuvre dans ladite chambre 4 pour produire une énergie dont une première partie est destinée à entraîner en rotation au moins une turbine 5.

L'énergie mécanique sortante de la turbine 5 entraîne ensuite un autre mécanisme rotatif tel qu'un alternateur, un compresseur, une pompe ou tout autre récepteur.

La deuxième partie du flux chaud est éjectée par une tuyère d'éjection située en aval du groupe auxiliaire de puissance 1.

Le groupe auxiliaire de puissance 1 produit du bruit, et notamment un bruit de compresseur composé en particulier d'un bruit tonal à une fréquence donnée directement liée à l'interaction rotor/stator au niveau du compresseur. Ce bruit de compresseur débouche principalement à l'amont du groupe auxiliaire de puissance via le conduit de l'entrée d'air 3. L'invention propose un traitement acoustique du conduit d'entrée d'air afin de diminuer ce bruit.

Pour ce faire, il est proposé d'insérer des pièces mécaniques amovibles d'isolation acoustique à l'intérieur de l'entrée d'air 3 illustrée à la figure 2.

Une telle entrée d'air 3 s'étend selon un axe longitudinal X-X' et comporte un conduit 6 destiné à véhiculer l'air ambiant vers le compresseur 2 via un plénum 7.

A l'intérieur du plénum 7 est disposé un carter 8, de forme annulaire, qui comporte une pluralité de bras de renfort 9, ici quatre, aptes à relier les parois internes dudit carter 8.

C'est entre chaque paire de renfort 9 qu'on vient positionner sur la surface d'écoulement du carter 8 les pièces mécaniques amovibles d'isolation acoustique 10.

On entend par « surface d'écoulement », une surface adjacente à l'écoulement de l'air dans le carter 8.

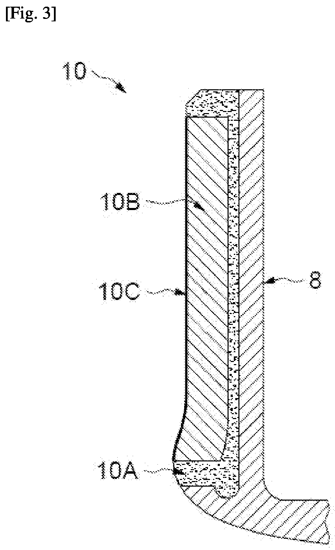

Une telle pièce mécanique 10 illustrée à la figure 3 reçoit un traitement acoustique qui permet d'atténuer le bruit dans l'entrée d'air 3.

Plus précisément, la pièce mécanique d'isolation acoustique 10 comprend un flasque métallique de support 10A ayant une surface active munie d'une cavité creusée, une couche d'isolation acoustique 10B ayant une configuration alvéolaire en nid d'abeille par exemple, et une couche dite résistive et perméable à l'air 10C.

Le flasque métallique de support 10A présente une face de fixation formée par une surface radiale destinée à être positionnée en contact avec une surface radiale intérieure (surface d'écoulement du carter 8), et une face opposée destinée à être en regard avec l'intérieur du carter 8 et qui reçoit la couche d'isolation acoustique 10B.

La couche résistive 10C perméable à l'air est alors disposée sur la couche d'isolation acoustique 10B par collage ou par soudage lorsque la couche résistive 10C est sous forme de tissus métalliques tressés ou sous forme de tôles perforées.

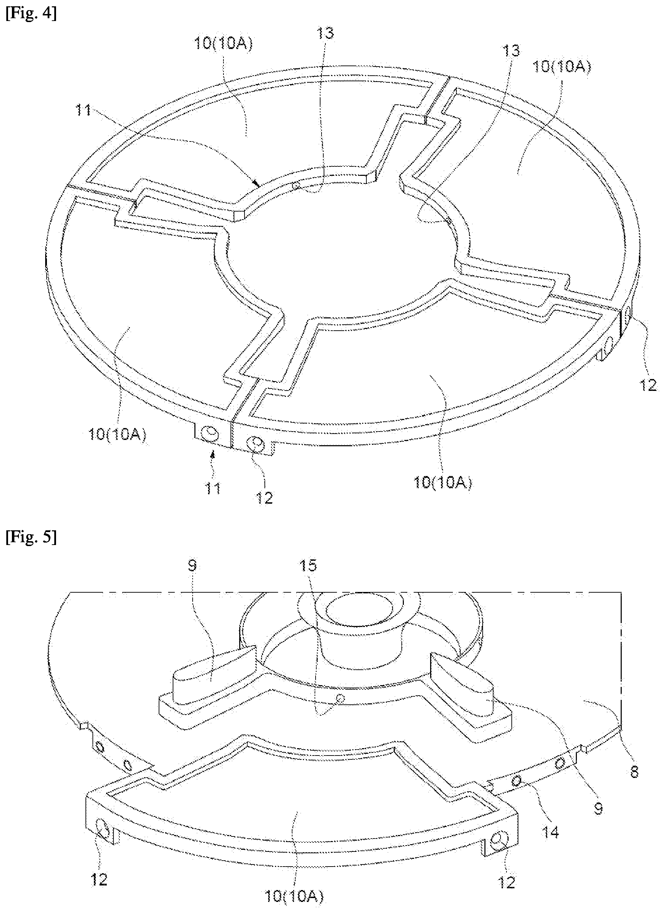

La figure 4 illustre un ensemble de quatre pièces mécaniques d'isolation acoustique 10 de forme annulaire qui est adaptée à la forme du carter 8.

Pour maintenir la pièce mécanique 10 en position sur la surface d'écoulement du carter 8, le flasque métallique de support 10A de la pièce mécanique 10 comprend des moyens de fixation 11.

Les moyens de fixation 11 sont destinés à coopérer avec le carter 8 de sorte que la pièce mécanique 10 et la surface d'écoulement du carter 8, délimitée par une paire de bras de renfort 9, soient superposées.

Plus particulièrement, les moyens de fixation 11 comportent deux premiers logements 12, creusés dans une surface d'extrémité radialement extérieure de la pièce mécanique 10, ainsi qu'un deuxième logement 13, creusé dans une surface d'extrémité radialement intérieure de la pièce mécanique 10.

Plus précisément, les logements 12 et 13 sont ménagés dans le flasque métallique de support 10A de la pièce mécanique 10.

Les deux premiers logements 12 sont aptes à recevoir chacun une vis de serrage, tandis que le deuxième logement est apte à recevoir un pion de centrage situé sur une surface d'extrémité radialement intérieure du carter 8.

Ainsi, tel qu'illustré dans la figure 5, les deux premiers logements 12 viennent chacun au contact de deux logements 14 creusés dans une surface d'extrémité radialement extérieure du carter 8.

Une première vis de serrage pourra alors être insérée dans l'un des deux premiers logements 12 et dans l'un des deux logements 14 du carter 8.

Une deuxième vis de serrage sera ensuite insérée dans le premier logement 12 et le logement 14 du carter 8 restants.

De même, le pion de centrage 15 du carter 8 vient s'insérer dans le deuxième logement 13 de la pièce mécanique 10.

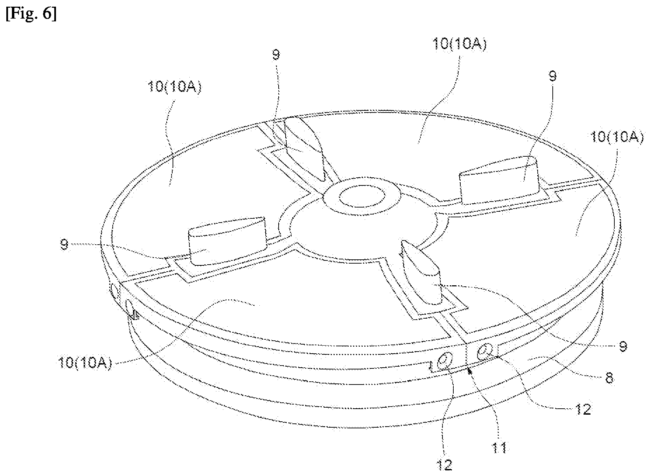

Grâce aux moyens de fixation 11, chaque pièce mécanique 10 peut être maintenue en position entre une paire de bras de renfort 9 comme illustré dans la figure 6.

La pièce mécanique 10 peut alors être démontée sans retirer intégralement le carter 8 lors d'une maintenance.

Par ailleurs, l'invention n'est pas limitée à ces modes de réalisation et de mise en œuvre mais en embrasse toutes les variantes. Par exemple, les pièces mécaniques d'isolation acoustique 10 peuvent être disposées sur tout carter de forme annulaire intégré dans tout type d'appareil.

## Revendications

1. Ensemble d'isolation acoustique pour groupe auxiliaire de puissance à compresseur centrifuge (1), comprenant un carter (8) d'entrée d'air (3) de forme annulaire et comportant une pluralité de bras de renfort (9) reliant ses parois internes, l'ensemble étant **caractérisé en ce qu'**il comprend une pluralité de pièces mécaniques amovibles d'isolation acoustique (10), chaque pièce mécanique (10) étant de forme annulaire, présentant une face de fixation formée par une surface radiale destinée à être positionnée en contact avec une surface radiale intérieure du carter (8), et une face opposée destinée à être en regard avec l'intérieur du carter (8) et comprenant des moyens de fixation (11) destinés à coopérer avec le carter (8) de sorte que la pièce mécanique (10) et la surface d'écoulement du carter (8), délimitée par une paire de bras de renfort (9), soient superposées.

2. Ensemble d'isolation acoustique selon la revendication 1, dans lequel les moyens de fixation (11) comportent au moins deux premiers logements (12) creusés dans une surface d'extrémité radialement extérieure de la pièce mécanique (10) et au moins un deuxième logement (13) creusé dans une surface d'extrémité radialement intérieure de la pièce mécanique (10), les deux premiers logements (12) étant chacun aptes à recevoir une vis de serrage et le deuxième logement (13) étant apte à recevoir un pion de centrage (15) situé sur une surface d'extrémité radialement intérieure du carter (8).

3. Ensemble d'isolation acoustique selon la revendication 1 ou 2, dans lequel chaque pièce mécanique (10) comporte un flasque métallique de support (10A) ayant une surface active munie d'une cavité creusée, une couche d'isolation acoustique (10B) ayant une structure alvéolaire disposée dans la cavité, et une couche perméable à l'air (10C) recouvrant la couche d'isolation acoustique (10B) et destinée à être en contact avec le flux d'air circulant à l'intérieur de l'entrée d'air (3).

4. Ensemble d'isolation acoustique selon la revendication 3, dans lequel la couche d'isolation acoustique (10B) et la couche perméable à l'air (10C) sont fixées entre elles par collage.

5. Ensemble d'isolation acoustique selon la revendication 3, dans lequel la couche d'isolation acoustique (10B) et la couche perméable à l'air (10C) sont fixées entre elles par soudage.

6. Ensemble d'isolation acoustique selon l'une quelconque des revendications 3 à 5, dans lequel la couche d'isolation acoustique (10B) est fixée à la cavité par collage.

7. Ensemble d'isolation acoustique selon la revendication 6, dans lequel le carter (8) comporte une grille de protection d'entrée d'air.

8. Groupe auxiliaire de puissance à compresseur centrifuge (1) pour aéronef, **caractérisé en ce qu'**il comprend un ensemble d'isolation acoustique selon l'une quelconque des revendications 1 à 7.

9. Aéronef **caractérisé en ce qu'**il comprend un groupe auxiliaire de puissance (1) selon la revendication 8.

## Patentansprüche

1. Schalldämmungsbaugruppe für ein Hilfstriebwerk mit einem Zentrifugalkompressor (1), umfassend ein ringförmiges Gehäuse (8) für den Lufteinlass (3), das eine Vielzahl von Verstärkungsarmen (9) enthält, die seine Innenwände verbinden, wobei die Baugruppe **dadurch gekennzeichnet ist, dass** sie eine Vielzahl von beweglichen mechanischen Schalldämmungsbauteilen (10) umfasst, wobei jedes mechanische Bauteil (10) ringförmig ist, eine Befestigungsseite aufweist, die aus einer radialen Fläche gebildet ist, die dazu bestimmt ist, in Kontakt mit einer radialen Innenfläche des Gehäuses (8) zu stehen, und eine gegenüberliegende Seite, die dazu bestimmt ist, dem Inneren des Gehäuses (8) zugewandt zu sein,
und Befestigungsmittel (11) umfasst, die dazu bestimmt sind, mit dem Gehäuse (8) zusammenzuwirken, so dass das mechanische Bauteil (10) und die Strömungsfläche des Gehäuses (8), die durch ein Paar von Verstärkungsarmen (9) begrenzt ist, übereinander liegen.

2. Schalldämmungsbaugruppe nach Anspruch 1, wobei die Befestigungsmittel (11) mindestens zwei erste Aufnahmen (12), die in eine radial äußere Endfläche des mechanischen Bauteils (10) eingehöhlt sind, und mindestens eine zweite Aufnahme (13) umfassen, die in eine radial innere Endfläche des mechanischen Bauteils (10) eingehöhlt ist, wobei die beiden ersten Aufnahmen (12) jeweils dazu geeignet sind, eine Spannschraube aufzunehmen, und die zweite Aufnahme (13) dazu geeignet ist, einen Zentrierstift (15) aufzunehmen, der sich an einer radial inneren Endfläche des Gehäuses (8) befindet.

3. Schalldämmungsbaugruppe nach Anspruch 1 oder 2, wobei jedes mechanische Bauteil (10) einen Metallträgerflansch (10A) mit einer aktiven Oberfläche, die mit einem ausgehöhlten Hohlraum versehen ist, eine Schalldämmungsschicht (10B) mit einer in dem Hohlraum angeordneten Wabenstruktur und eine luftdurchlässige Schicht (10C) umfasst, die die Schalldämmungsschicht (10B) bedeckt und dazu bestimmt ist, mit dem im Lufteinlass (3) zirkulierenden Luftstrom in Kontakt zu stehen.

4. Schalldämmungsbaugruppe nach Anspruch 3, wobei die Schalldämmungsschicht (10B) und die luftdurchlässige Schicht (10C) durch Verkleben aneinander befestigt sind.

5. Schalldämmungsbaugruppe nach Anspruch 3, wobei die Schalldämmungsschicht (10B) und die luftdurchlässige Schicht (10C) durch Schweißen aneinander befestigt sind.

6. Schalldämmungsbaugruppe nach einem der Ansprüche 3 bis 5, wobei die Schalldämmungsschicht (10B) durch Verkleben an dem Hohlraum befestigt ist.

7. Schalldämmungsbaugruppe nach Anspruch 6, wobei das Gehäuse (8) ein Lufteinlassschutzgitter umfasst.

8. Hilfstriebwerk mit einem Zentrifugalkompressor (1) für Luftfahrzeuge, **dadurch gekennzeichnet, dass** es eine Schalldämmungsbaugruppe nach einem der Ansprüche 1 bis 7 umfasst.

9. Luftfahrzeug, **dadurch gekennzeichnet, dass** es ein Hilfstriebwerk (1) nach Anspruch 8 umfasst.

## Claims

1. An acoustic insulation assembly for an auxiliary power unit (1) with a centrifugal compressor, comprising an annular-shaped casing (8) of an air inlet (3) and comprising a plurality of reinforcing arms (9) connecting its inner walls, the assembly being **characterised in that** it comprises a plurality of removable acoustic insulation mechanical parts (10), each mechanical part (10) being annular-shaped, having a fastening face formed by a radial surface to be positioned in contact with an internal radial surface of the casing (8), and an opposite face to be facing inside the casing (8)
and comprising fastening means (11) to cooperate with the casing (8) such that the mechanical part (10) and the flow surface of the casing (8), delimited by a pair of reinforcing arms (9), are superimposed.

2. The acoustic insulation assembly according to claim 1, wherein the fastening means (11) comprise at least two first housings (12) hollowed out in a radially external end surface of the mechanical part (10) and at least one second housing (13) hollowed out in a radially internal end surface of the mechanical part (10), the first two housings (12) being each capable of receiving a clamping screw and the second housing (13) being capable of receiving a centring pin (15) located on a radially internal end surface of the casing (8).

3. The acoustic insulation assembly according to claim 1 or 2, wherein each mechanical part (10) includes a metal support flange (10A) having an active surface provided with a hollowed out cavity, an acoustic insulation layer (10B) having an honeycomb structure disposed in the cavity, and an air-permeable layer (10C) covering the acoustic insulation layer (10B) and to be in contact with the air flow circulating inside the air inlet (3).

4. The acoustic insulation assembly according to claim 3, wherein the acoustic insulation layer (10B) and the air-permeable layer (10C) are fastened together by bonding.

5. The acoustic insulation assembly according to claim 3, wherein the acoustic insulation layer (10B) and the air-permeable layer (10C) are fastened together by welding.

6. The acoustic insulation assembly according to any of claims 3 to 5, wherein the acoustic insulation layer (10B) is fastened to the cavity by bonding.

7. The acoustic insulation assembly according to claim 6, wherein the casing (8) includes an air inlet protective grid.

8. An auxiliary power unit (1) with a centrifugal compressor for an aircraft, **characterised in that** it comprises an acoustic insulation assembly according to any of claims 1 to 7.

9. An aircraft **characterised in that** it comprises an auxiliary power unit (1) according to claim 8.
